(19)

**Europäisches Patentamt**
**European Patent Office**
**Office européen des brevets**

(11) **EP 2 157 408 A1**

(12) **EUROPEAN PATENT APPLICATION**

(43) Date of publication:
**24.02.2010 Bulletin 2010/08**

(51) Int Cl.:
***G01D 4/00*** *(2006.01)*

(21) Application number: **08014900.8**

(22) Date of filing: **22.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Van Egmond, Nicolaas Wilhelmus Jozef**
**8051 NZ Hattem (NL)**

(72) Inventors:
• **van Egmond, Nicolaas Wilhelmus Jozef**
**Hattem 8051 NZ (NL)**
• **van der Meer, Dirk**
**Heerde 8181 ZD (NL)**

(54) **Device and method for controlling domestic energy consumption**

(57) The device is a low-cost display device, rendering actual information on the energy consumption at home, enabling the consumer to set a target to save energy consumption, and to see the outcome whether the target is fulfilled or not. This is achieved using a specific algorithm based on the influence of the outdoor temperature. The user is rewarded either with a positive indication (for example trees for good behaviour) or a negative indication (for example chimneys for bad behaviour) and a statement "TODAY YOU ARE GREEN" or "TODAY YOU ARE NOT GREEN".

Fig. 2

EP 2 157 408 A1

**Description**

Technical Field

The device is a low-cost display device, rendering actual information on the energy consumption at home, enabling the consumer to set a target to save energy consumption, and to see the outcome whether the target is fulfilled or not. The user is rewarded either with a positive indication (for example trees for good behaviour) or a negative indication (for example chimneys for bad behaviour) and a statement "TODAY YOU ARE GREEN" or "TODAY YOU ARE NOT GREEN".

The device using low power existing Liquid Crystal Display technology and existing low power wireless communication technology.

The device receives information from the gas meter 4 and the electricity meter 3 by means of wireless communication. In case of use of a conventional meter (meter with a mechanical counter) the counter is sensed via an optical sensor on the outside of the meter where it detects the movement of the least significant digit for the gas meter 4 and the rotary disc or flashing light for the electricity meter 3. In case of a smart meter the consumption data are derived from the relevant port of such meter.

The actual time and date are received via a DCF 77 time receiver 7. The indoor temperature 6 is measured internally while the outdoor temperature 5 is received via wireless communication from an outdoor temperature sensor.

The initial information is obtained by a setup procedure using setup keys 8 on the device. With the setup procedure the user enters the annual energy consumption of gas and electricity, the current price of gas and electricity, the conversion factor of the electricity meter in revolutions per kWh and the heating source gas or electricity.

The energy consumption (gas and electricity) is made visible on the display 2, where it will show the energy consumption of gas, electricity or both in Euro's of last week, day or month and this week, day or month. Via the display mode keys 9 the user can switch between gas, electricity or both and the period on the display, day, week or month.

As a user you get a deeper insight in the energy flows at home. This is valid for all at home having access to the display 2. A new conversation subject is there to share among all at home. The display helps raising consciousness and influences people's behaviour in a friendly and consequent manner. Every for example 5 or 10 minutes the display 2 will present actualized information. This means that the positive or negative indication shown on the display may change dependent of the level of "green" behaviour in house. Doors or windows closed, less heating, less electric wash drying will make a substantial difference. The display 2 will attract your attention e.g. to let you stop heating at indoor or outdoor temperatures exceeding 18°C. And above all, in the main screen of the display you will be kept informed about your energy consumption in € (or other currency). Given the fact that money is a motivating factor, the display may win its spot in each living. Furthermore, now we are regularly confronted with price increases of gas and electricity and moreover practical uncertainty in view of expected oil shortages is in the news, we will, both, act in our own interest on the one hand and help to reduce greenhouse gas emissions on the other. Even if shortages or price increases of energy will stay away or will not harm our personal daily life, we will still get offered every day the opportunity to quit bad behaviour in terms of energy consumption and feel urged to do something good. Owing to the display that is wirelessly connected to irrespective smart or conventional energy meters. The display is a device that attracts your attention to your energy consumption this week, last week or any other time period, keeps you informed, helps you control energy consumption, lets you think on proper ways to avoid high energy bills and ways to prevent waste energy. Because measures taken will have immediately and visibly the expected desired effect. So the display encourages you to take more and more strategic measures and even to invest in energy saving adjustments of the house like insolating the roof, walls, floors etc.

Algorithm

The algorithm whereby a positive indication (for example trees for good behaviour) and a negative indication (for example chimneys for bad behaviour) is based upon the fact that the amount of heating related energy is dependent on the outdoor temperature.

A positive indication (in the example shown hereafter for a week; for other periods the calculation should be made accordingly) is displayed on the device in all cases that the outcome of the following calculation is zero or positive.

Budgeted amount of energy in € (gas and electricity, given the average daily outdoor temperature during a week) multiplied by (100% minus Saving target in %) minus Actual amount of energy in € (gas and electricity) during such week. This formula can be detailed as follows:

$$\{(18 \text{ minus Average temperature during the last 168 hours}) * 7 * f *$$
$$(\text{Annual gas consumption in } m^3 * \text{Price of gas}) + 1/52 * (\text{Annual Electricity}$$
$$\text{consumption in kWh} * \text{Price electricity})\} * (100\% \text{ minus Saving Target in}$$
$$\text{percent}) \text{ minus (Actual gas consumption during the last 168 hours} * \text{Price}$$
$$\text{of gas}) \text{ minus (Actual electricity consumption during the last 168 hours} *$$
$$\text{Price of electricity}).$$

A negative indication is displayed in all other cases.

f is a factor that is dependent of the climate in the place where the device and method are used; for example in the Netherlands this factor is on average around 0,0003627 (this is 1 / 2757). The formula as well as the factor may be changed or extended as may be needed for a specific use, e.g. when the member(s) of the household are only partly at home during the week. The formula should also be changed when the device and method are used in a subtropical or tropical climate where air-conditioning is asking substantial amounts of energy.

The factor f is 1 / the sum of "degree days" of all days during the calendar year whereby "degree day" is defined as the positive difference between 18 (heating limit) and the average temperature during the complete day. Furthermore the user of the apparatus can be informed about the extent of saving energy in comparison to the saving target of e.g. 10%. A positive indication (laughing smiley) is displayed together with text e.g. "This week even 15.6% "and a negative indication (weeping smiley) together with text "Last week only 6.7%".

The saving percentage S for such week period (Last week is defined as the most recent full 7 days period starting on Monday 00.00 hours and This week is defined as the current 7 days period till the last consumption data were received) is calculated as follows:

$$S = \{\text{Budgeted amount of energy in € (gas and electric, given the average}$$
$$\text{daily outdoor temperature during a week}) \text{ minus Actual amount of energy}$$
$$\text{in € (gas and electricity)} / \text{Budgeted amount of energy in € (gas and}$$
$$\text{electric}\} * 100.$$

So the following calculation for the relevant period should be carried out to find the data to be presented on the display.

$$S = \{(18 \text{ minus Average temperature during the relevant week period}) * 7 *$$
$$f * (\text{Annual gas consumption in } m^3 * \text{Price of gas}) + 1/52 * (\text{Annual}$$
$$\text{Electricity consumption in kWh} * \text{Price electricity})\} * \text{ minus (Actual gas}$$
$$\text{consumption during the relevant week period} * \text{Price of gas}) \text{ minus (Actual}$$
$$\text{electricity consumption during the relevant week period} * \text{Price of}$$
$$\text{electricity}) / \{(18 \text{ minus Average temperature during the relevant week}$$
$$\text{period}) * 7 * f * (\text{Annual gas consumption in } m^3 * \text{Price of gas}) + 1/52 *$$
$$(\text{Annual Electricity consumption in kWh} * \text{Price electricity})\} * 100$$

In order to present the statement "Today you are GREEN" or "Today you are not GREEN" the following calculation should be carried out whereby a positive outcome or outcome equals zero leads to statement GREEN and a negative outcome leads to statement "NOT GREEN".

For such one day period the calculation is as follows:

{(18 minus Average temperature during the last 24 hours) * f * (Annual gas consumption in m³ * Price of gas) + 1/365 * (Annual Electricity consumption in kWh * Price electricity)} * (100% – Saving Target in percent) minus (Actual gas consumption during the last 24 hours * Price of gas) minus (Actual electricity consumption during the last 24 hours * Price of electricity).

In order to present on the display the number of trees respectively the number of chimneys the following calculation is carried out:

If Saving Target is smaller than or equal to the Saving Percentage during the most recent 24 hours:

$$\text{Number of trees} = \{\text{Saving Target in \% minus Saving Percentage}\} / c.$$

If Saving Target is greater than the Saving Percentage during the most recent 24 hours:

$$\text{Number of chimneys} = \{\text{Saving Percentage minus Saving Target in \%}\} / c$$

whereby c is a constant factor that can be chosen e.g. 1 for moderate number of icons (trees or chimneys) and 0,5 for larger number of icons (trees or chimneys).

**Background art**

**Disclosure of Invention**

**Brief Description of Figures in the Drawings**

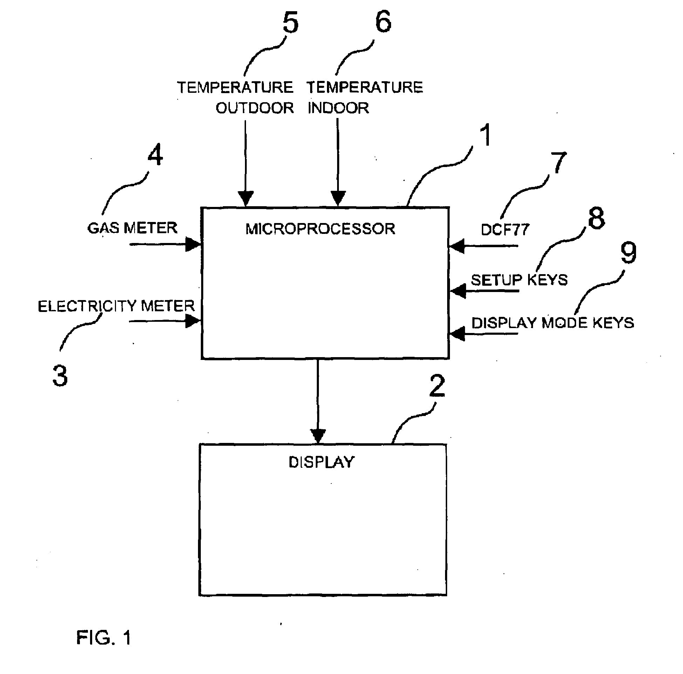

Figure 1 gives a block diagram of the device where a microprocessor 1 controls a display 2.

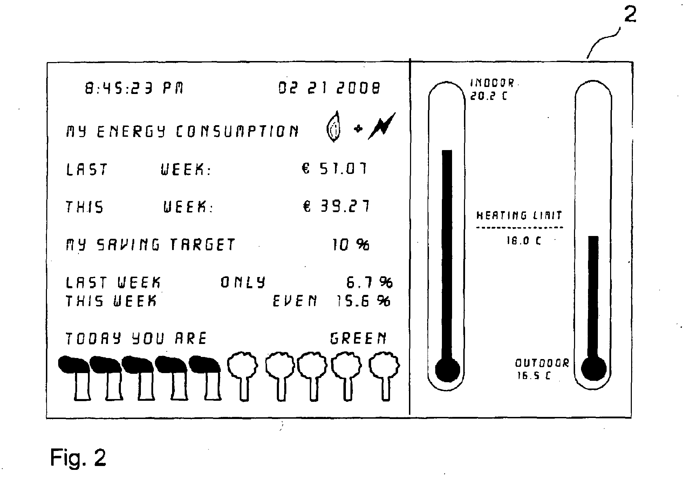

Figure 2 shows an example of the display 2.

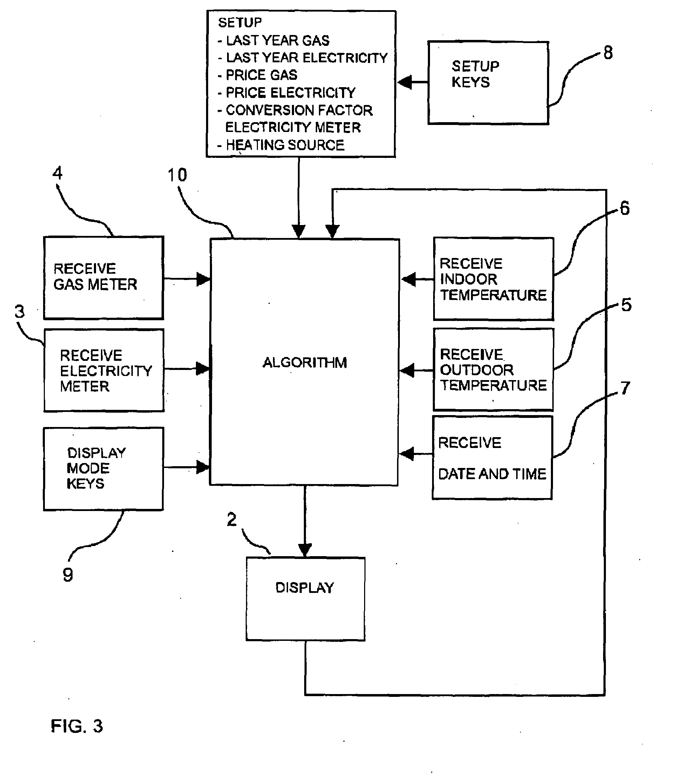

Figure 3 shows the block diagram of the microprocessor 1 data flow.

**Mode(s) for Carrying Out the Invention**

**Industrial Application**

The invention can be used to create awareness on energy consumption. It is a method and device to control the energy consumption and as a consequence reduce the costs of energy consumption and reduce $CO_2$ gas emission.

**Sequence Listing Free Text**

**References**

NL N2000823 C (N.W.J VAN EGMOND) 21-8-2007

**Claims**

1. Device and method for monitoring domestic energy consumption and advising the user to be above or below the chosen settings of the saving target. The advice of the heating related consumption (suppose this will be gas consumption) is calculated using the positive difference between heating limit (18 degrees Celsius is usual) and the outdoor temperature in an algorithm 10 as factor combined with the annual gas consumption. The advice of the non-heating related consumption (suppose this will be electricity consumption) is calculated using the annual electricity consumption split up proportionally over the year. If heating is neither dependent of gas nor of electricity, both advices are calculated based on figures split up proportionally over the year.

2. Device and method according to claim 1 which receives wireless data from gas- and electricity meters at home (irrespective smart meters or conventional meters) and from an outdoor temperature sensor with the effect that - using specific algorithms - the actual energy flows can be compared with the estimated target energy flows. So the actual energy consumption of e.g. last 7 days can be compared with an estimated amount, taking into account the outdoor temperature and a saving target of e.g. 10%.

3. Device and method according to claim 1 which is featured with smart algorithms in such a way that the conclusions presented on the display "Saving target fulfilled or not" and "Today you are green or not" can be derived.

4. Device and method according to claim 1 with other units or peripheral services using the internet, mobile phone, TV-channels or similar output and communication methods.

FIG. 1

Fig. 2

FIG. 3

Europäisches
Patentamt

European
Patent Office

Office européen
des brevets

# EUROPEAN SEARCH REPORT

Application Number

EP 08 01 4900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 998 093 A (BERTOLASI ROBERT B) 21 December 1976 (1976-12-21) | 1-3 | INV. G01D4/00 |
| A | * column 1, line 50 - column 5, line 34; claims 1,6; figure 2 * | 4 | |
| Y | WO 2008/025939 A (EWING TANYA BARBARA [GB]; MCCORKINDALE KENNETH [GB]; SCUSE JEREMY [GB]) 6 March 2008 (2008-03-06) * the whole document * | 1-4 | |
| Y | CA 2 309 125 A1 (MILES GREYDON KEITH [CA]) 19 November 2001 (2001-11-19) * the whole document * | 1-4 | |
| Y | AT 384 309 B (APOIO UNTERNEHMUNGSBERATUNGSGE [AT]) 27 October 1987 (1987-10-27) * page 2, line 44 - page 3, line 46 * | 1-4 | |

| TECHNICAL FIELDS SEARCHED (IPC) |
|---|
| G01R G06Q G01D |

The present search report has been drawn up for all claims

| Place of search | Date of completion of the search | Examiner |
|---|---|---|
| Munich | 30 March 2009 | Faber-Jurk, Sonja |

EPO FORM 1503 03.82 (P04C01)

**ANNEX TO THE EUROPEAN SEARCH REPORT
ON EUROPEAN PATENT APPLICATION NO.**                    EP 08 01 4900

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2009

| Patent document cited in search report | | | Publication date | Patent family member(s) | Publication date |
|---|---|---|---|---|---|
| US 3998093 | | A | 21-12-1976 | NONE | |
| WO 2008025939 | | A | 06-03-2008 | NONE | |
| CA 2309125 | | A1 | 19-11-2001 | NONE | |
| AT 384309 | | B | 27-10-1987 | NONE | |

EPO FORM P0459

For more details about this annex : see Official Journal of the European Patent Office, No. 12/82